# EUROPEAN PATENT SPECIFICATION

(11) **EP 3 376 023 B1**
(45) Date of publication and mention of the grant of the patent: **11.09.2019**
(21) Application number: 18162113.7
(22) Date of filing: 15.03.2018
(51) Int. Cl.: F03B 13/14, F03B 13/18

(54) **PLANT TO EXPLOIT THE ENERGY OF A WATER WAVE MOTION**
WELLENKRAFTWERK
CENTRALE HOULOMOTRICE

(30) Priority: 17.03.2017 IT 201700029642
(43) Date of publication of application: 19.09.2018
(73) Proprietor: Caria, Antonia, 07100 Sassari (SS) (IT)
(72) Inventor: Caria, Antonia, 07100 Sassari (SS) (IT)
(74) Representative: De Ros, Alberto

(56) References cited:
- EP-A1- 2 511 519
- EP-A1- 2 873 853
- GB-A- 2 086 492
- JP-A- H01 100 384
- US-A- 3 487 228
- US-A- 4 698 969

## Description

### TECHNICAL FIELD

The present invention relates to a plant for exploiting the energy of a wave motion of water of an ocean or a sea or a lake; it is a plant in which the wave motion of water is transformed into an oscillatory motion of a water column.

### PRIOR ART

OWC (= Oscillating Water Column) plants are well known.

Usually, the oscillation of the water column is used to create an air flow with a back-and-forth movement, and then the flow is used to make a turbine rotate and therefore generate an electric current.

The generation of electric current starting from an air flow with a back-and-forth movement is complicated and not very efficient.

Furthermore, such generation of electric current takes place simultaneously to the wave motion; it is typical for a lot of electric current to be generated when the consumption is low and that not much electric current is generated when the consumption is high. Therefore (very expensive and not very efficient) electric current storage systems are necessary.

From patent documents EP2873853A1, JPH01100384A, EP2511519A1 and US3487228A, plants are known that are adapted to transform the wave motion of water into an oscillatory motion of a water column; a vessel floats on the water column; a pumping unit fastened to the vessel pumps the water of the water column into an artificial basin or a tank.

### SUMMARY

The Applicant therefore set out the objective to improve the prior art and to solve the problems set forth above.

Such an objective is substantially achieved thanks to the plant having the technical features set out in the appended claims that form an integral part of the present description.

The idea underlying the present invention is to pump the water subject to wave motion into an artificial basin or a tank with a high piezometric head or a pressurised tank by exploiting the energy of the wave motion itself.

In this way, the subsequent generation of current is simple and efficient, and can be performed at any time regardless of when the wave motion occurs.

A plant according to the present invention can be used to exploit the energy of a wave motion of water of an ocean or a sea or a lake. In general, it comprises a structure that is fastened to the ground and that is adapted to transform the wave motion of water into an oscillatory motion of a water column, a vessel adapted to float on the water column, and a pumping unit; the vessel comprises a hull; the pumping unit is housed at least partially in the hull; the pumping unit has inlets for water to be pumped fluidly connected to the bottom of the hull, and outlets for pumped water; a pumping pipe is fluidly connected with the outlets of the pumping unit and is adapted to supply pumped water to an artificial basin (in particular situated at a high piezometric head with respect to the free surface of the ocean or sea or lake) or a tank (in particular pressurised).

According to embodiments of the present invention, the conversion of the kinetic energy of the water subject to wave motion to potential energy of the water stationary in the basin or tank is particularly efficient (obviously, the efficiency can never be 100%, but it could even reach 50%).

### LIST OF FIGURES

The present invention will become clearer from the following detailed description to be considered together with the appended drawings in which:
Fig. 1 shows a schematic vertical sectional view of an embodiment of a structure according to the present invention,
Fig. 2 shows a schematic vertical sectional view of an embodiment of a vessel with a pumping unit according to the present invention,
Fig. 3 shows a schematic vertical sectional view of an embodiment of a plant according to the present invention in a first position during its operation,
Fig. 4 shows a schematic vertical sectional view of an embodiment of a plant according to the present invention in a second position during its operation,
Fig. 5 shows a schematic vertical sectional view of an embodiment of a plant according to the present invention in a third position during its operation,
Fig. 6 shows a schematic vertical sectional view of an embodiment of a plant according to the present invention in a fourth position during its operation,
Fig. 7 shows a schematic vertical sectional view of an embodiment of a plant according to the present invention in a fifth position during its operation,
Fig. 8 shows schematic vertical sectional views of an embodiment of a pumping device according to the present invention in five first positions during its operation,
Fig. 9 shows schematic vertical sectional views of the device of Fig. 8 in five second positions during its operation, and
Fig. 10 shows a schematic vertical sectional view of the plant of figures 3-7 with further details.

As can be easily understood, there are various ways of practically implementing the present invention which is defined in its main advantageous aspects in the appended claims.

### DETAILED DESCRIPTION

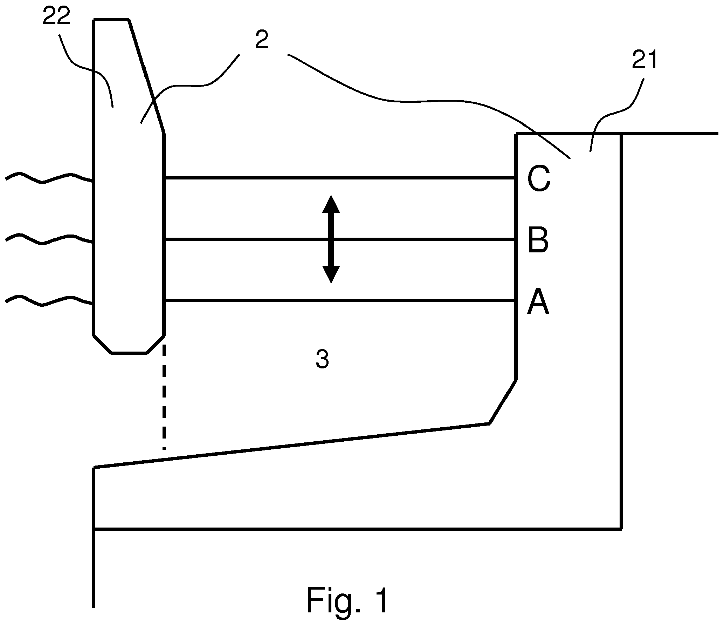

In Fig. 1 a stretch of coast, for example, marine coast, subject to wave motion of water can be seen (schematically and in vertical section).

At this stretch of coast, a structure 2 has been realised, which is fastened to the ground of the coast and which is part of an embodiment of a plant 1 according to the present invention. Fundamentally, the structure 2 comprises a tank 21 and a dam 22 which define a water column 3 which is in fluid communication with the sea. Thanks to the structure 2, the wave motion of the sea water is transformed into a vertical oscillatory motion of the water of column 3.

In Fig. 1, three possible levels A, B and C of the water in column 3 are shown in a certain (short) time interval with a certain force of the wave motion of the sea. Level A corresponds to the minimum water level of column 3 which occurs when an external wave reaches a minimum; level C corresponds to the maximum level of the water of column 3 which occurs when an external wave reaches a maximum; level B corresponds to a (any) intermediate level between A and C. It is to be noted that in a different time interval with a higher force of the wave motion of the sea, the water of column 3 could reach a higher level than level C and a lower level than level A, while in a different time interval with a lower force of the wave motion of the sea, the water of column 3 could reach a lower level than level C and a higher level than level A.

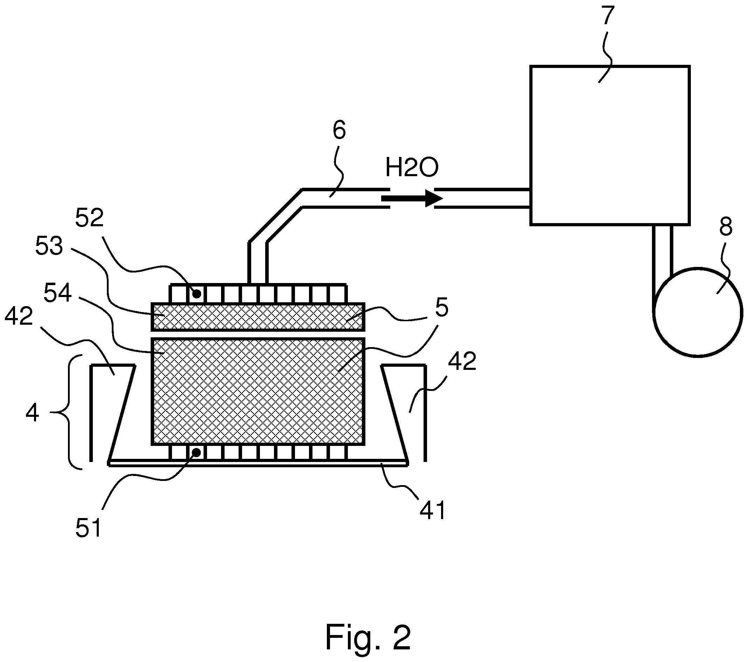

Fig. 2 schematically shows the other components of the embodiment of the plant 1 according to the present invention.

Therefore, the plant 1 of Fig. 1 and of Fig. 2 comprises, as well as the structure 2, a vessel 4, a pumping unit 5, a pumping pipe 6, a tank 7 and a turbine 8. In Fig. 2, the unit 5 is composed of a fixed part 53 (which comprises a first set of components), in particular fastened to the structure 2, and a movable part 54 (which comprises a second set of components); further information will be provided below; therefore, it can be said that the unit 5 is constrained to the structure 2.

The vessel 4 is adapted to float on the water column 3 and comprises a hull 41 and, for example, two ballast cavities 42 associated with the hull 41; as can be understood below, the hull 41 of the vessel 4 is adapted to be partially immersed in the water and its displacement varies (in particular periodically) during the operation of the plant 1.

The pumping unit 5 is housed at least partially in the hull 41; in particular, the movable part 54 is fastened to the vessel 4 (and therefore moves therewith) and is housed partially in the hull 41.

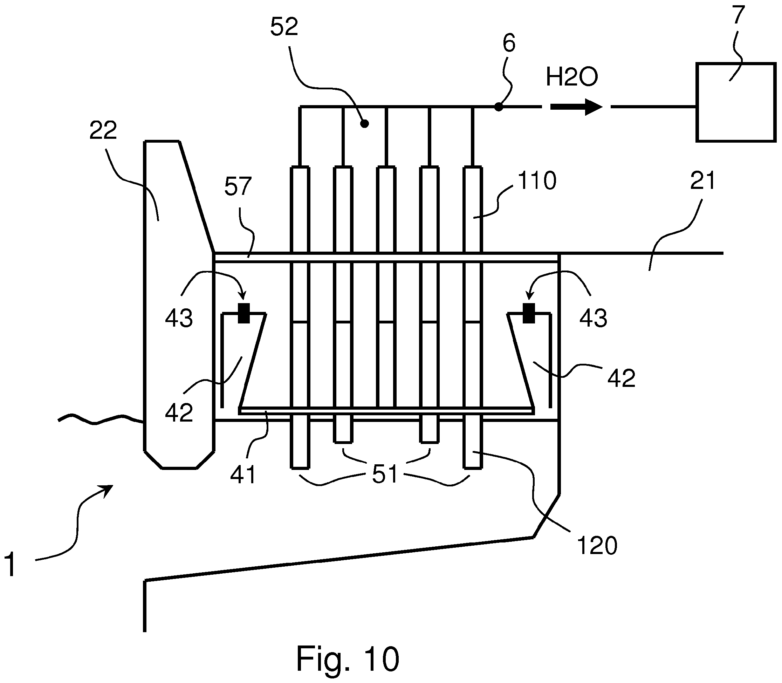

The fixed part 53 is fastened to the structure 2 (see Fig. 10).

The pumping unit 5 has inlets 51 for water to be pumped fluidly connected to the bottom of the hull 41, and outlets 52 for pumped water.

The pumping pipe 6 is fluidly connected with the outlets 52 of the pumping unit 5 and is adapted to supply pumped water to the pressurised tank 7 (alternatively it could be an artificial basin) at a high piezometric head, i.e. which is at a certain vertical distance with respect to the free surface of the sea (also in the event of high tide and high waves).

The tank 7 is associated with the turbine 8, in particular there is a conduit that connects an outlet of the tank 7 to an inlet of the Pelton wheel 8, so as to be able to activate the turbine 8 when it is necessary to produce electric current.

There can be any number of ballast cavities 42 and in any positions, and they facilitate the descent of the vessel 4 when the water of the column 3 descends. In fact, the cavities 42 are adapted to receive water from the column 3 while the vessel 4 rises and to return water to the column 3 while the vessel 4 descends (in particular at the end of its descent). The cavities 42 can be advantageously equipped with valves 43 (see Fig. 10) for the outlet/inlet of air while water enters/exits.

Preferably, the pumping unit 5 supplies to the outlets 52 a variable quantity of pumped water according to the height of the vessel 4. In particular, such quantity of pumped water increases as the height of the vessel 4 increases.

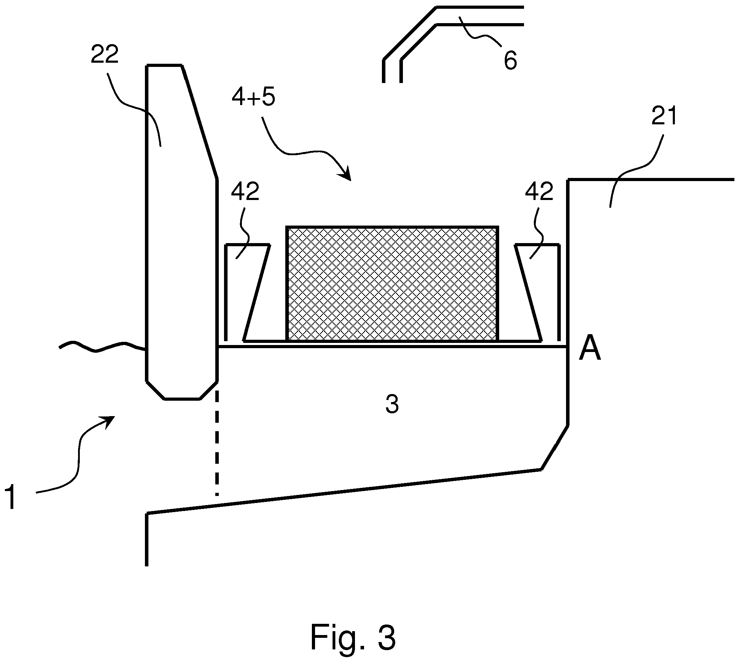

With the aid of figures from Fig. 3 to Fig. 7, the operation of the plant 1 of Fig. 1 and Fig. 2 will be explained below.

In Fig. 3, the vessel 4 (together with the pumping unit 5) floats on the column 3 and the water level is minimum (level A); there is no water in the cavities 42; water is not pumped from the unit 5 into the pipe 6. It is to be noted that in Fig. 3 the hull of the vessel 4 is shown at a short distance from the free surface of the water of the column 3; this has only been performed for the clarity of the drawing; in actual fact, the hull is slightly immersed in the water with displacement equal to the weight of the vessel 4.

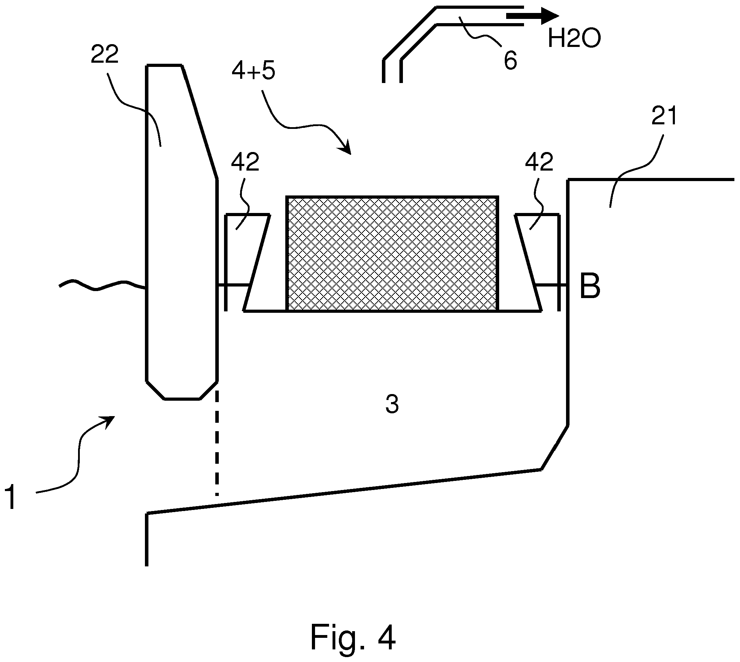

In Fig. 4, the vessel 4 (together with the pumping unit 5) floats on the column 3 and the water level is rising (level B); there is a bit of water in the cavities 42; the water of the column 3 pushes from the bottom on the hull of the vessel 4 and the displacement increases; water is pumped from the unit 5 into the pipe 6.

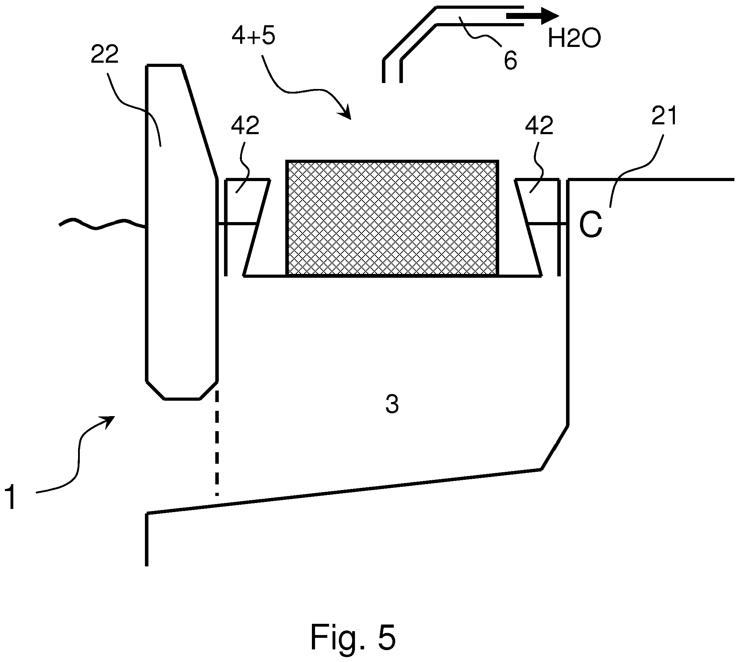

In Fig. 5, the vessel 4 (together with the pumping unit 5) floats on the column 3 and the water level has risen to maximum (level C); there is a lot of water in the cavities 42; the water of the column 3 continues to push from the bottom on the hull of the vessel 4 and the displacement increases further; water is pumped from the unit 5 into the pipe 6.

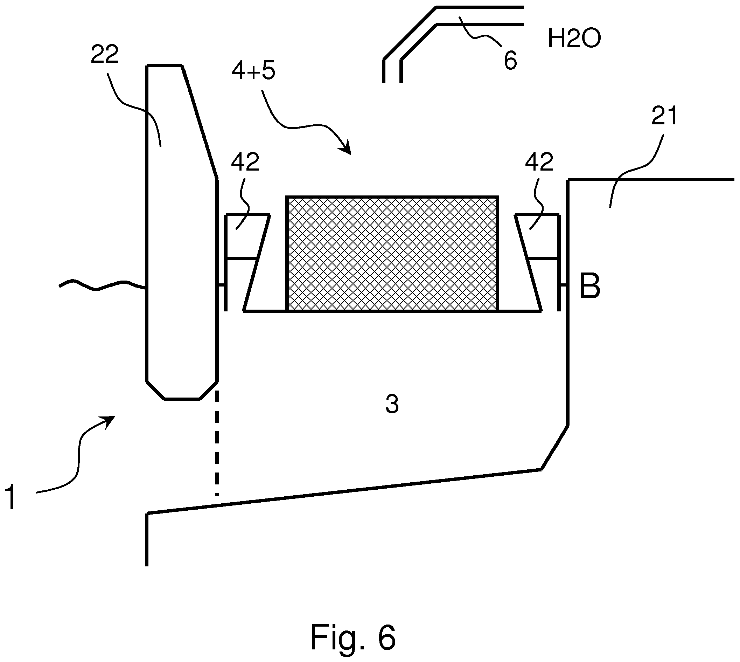

In Fig. 6, the vessel 4 (together with the pumping unit 5) floats on the column 3 and the water level is decreasing (level B); the water of the column 3 does not push any longer on the hull of the vessel 4 and the displacement decreases; the water in the cavities 42 remains at maximum level (i.e. as in Fig. 5) since no air (or very little air) enters the cavities, which promotes the descent of the vessel 4; no water is pumped from the unit 5 into the pipe 6.

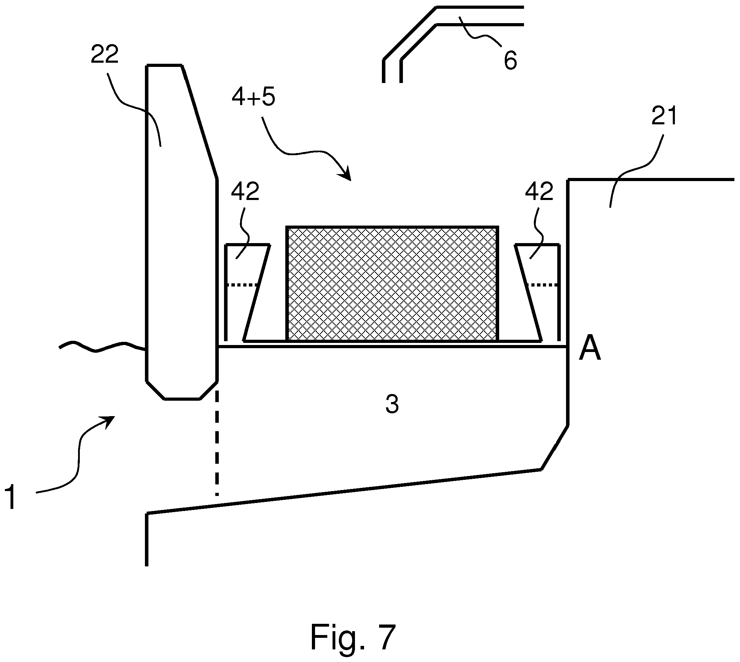

In Fig. 7, the vessel 4 (together with the pumping unit 5) floats on the column 3 and the water level has dropped to minimum (level A); there is no more water in the cavities 42; water is not pumped from the unit 5 into the pipe 6. It is to be noted that in Fig. 7 the hull of the vessel 4 is shown at a short distance from the free surface of the water of the column 3; this has only been performed for the clarity of the drawing; in actual fact, the hull is slightly immersed in the water with displacement equal to the weight of the vessel 4. In Fig. 7, a dashed line shows the level of the water in the cavities 42 just before the vessel 4 reaches its lower minimum position, i.e. that of Fig. 7; in fact, the cavities 42 are emptied of water precisely at the end of the downward stroke of the vessel 4.

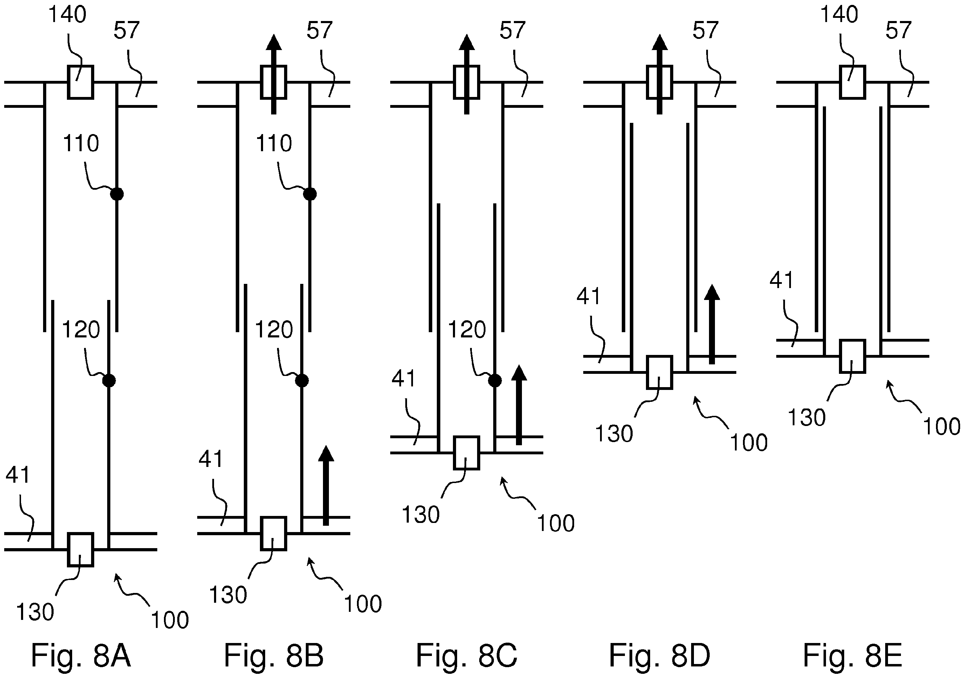

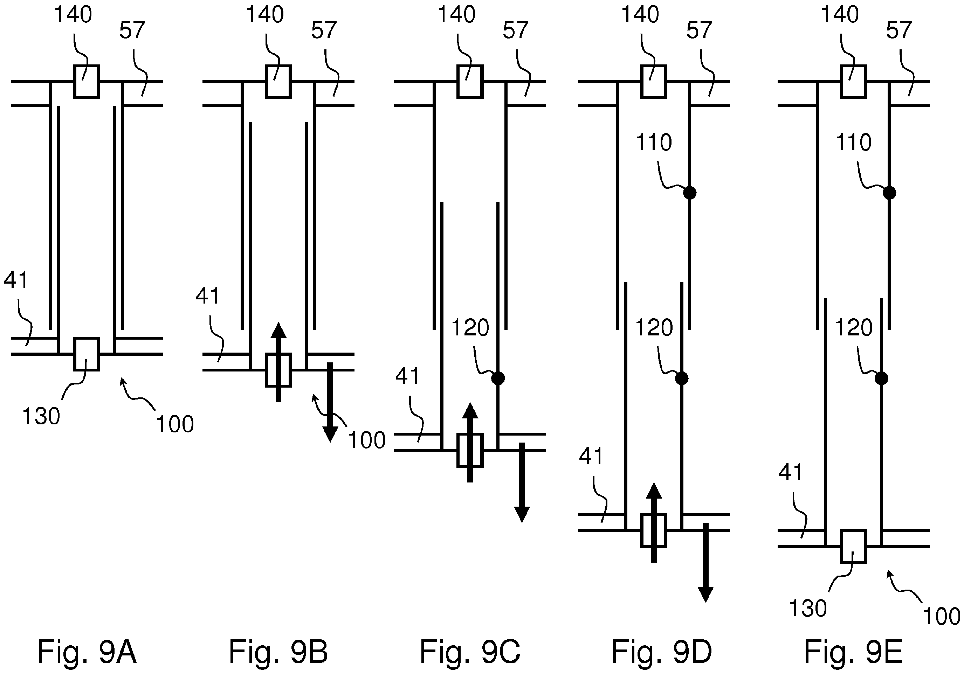

According to a particularly advantageous embodiment, the pumping unit 5 comprises a plurality of pumping devices 100 (see Fig. 8 and Fig. 9).

Each of the pumping devices 100 comprises a cylinder 110 and a hollow piston 120 associated with each other; in particular, the hollow piston 120 is adapted to slide in the cylinder 110 and to have a back-and-forth movement. An inlet 51 of the unit 5 is fluidly connected to a hollow piston 120 and an outlet 52 of the unit 5 is fluidly connected to the cylinder 110.

A first one-way check valve 130 is at a lower end of the hollow piston 120 and a second one-way check valve 140 is at an upper end of the cylinder 110.

As can be seen in Fig. 8 and Fig. 9, each cylinder 110 is fixed and is fastened to the structure 2 through a plate 57, while each hollow piston 120 is movable and is fastened to the hull 41.

With the aid of Fig. 8 and Fig. 9, the operation of the pumping device 100 will be explained below.

Fig. 8A could correspond to the condition of a device 100 when the vessel 4 is in the condition of Fig. 3.

In Fig. 8A, the piston 120 is stationary in its lower extreme position; there is no flow of sea water through the valves 130 and 140.

In Fig. 8B, the piston 120 has just moved from its lower extreme position, i.e. it is at the start of its upward stroke; there is a flow of sea water through the valve 140 towards the pipe 6; sea water is contained partially in the cavity of the piston 120 and partially in the cylinder 110.

In Fig. 8C, the piston 120 is half way along its upward stroke; there is a flow of sea water through the valve 140.

In Fig. 8D, the piston 120 is at the end of its upward stroke; there is a flow of sea water through the valve 140.

In Fig. 8E, the piston 120 is stationary in its upper extreme position; there is no flow of sea water through the valves 130 and 140.

Fig. 8E and Fig. 9A could correspond to the condition of a device 100 when the vessel 4 is in the condition of Fig. 5.

In Fig. 9A, the piston 120 is stationary in its upper extreme position; there is no flow of sea water through the valves 130 and 140.

In Fig. 9B, the piston 120 has just moved from its upper extreme position, i.e. it is at the start of its downward stroke; there is a flow of sea water through the valve 130 from below the hull 41; sea water will be stored partially in the cavity of the piston 120 and partially in the cylinder 110.

In Fig. 9C, the piston 120 is half way along its downward stroke; there is a flow of sea water through the valve 130.

In Fig. 9D, the piston 120 is at the end of its downward stroke; there is a flow of sea water through the valve 130.

In Fig. 9E, the piston 120 is stationary in its lower extreme position; there is no flow of sea water through the valves 130 and 140.

Fig. 9E could correspond to the condition of a device 100 when the vessel 4 is in the condition of Fig. 7.

In Fig. 10, the plant 1 can be seen in greater detail; in particular, the plant 1 can be seen with the pumping unit 5 in greater detail.

In particular, it can be seen that the pumping unit 5 comprises, for example, five pumping devices 100 arranged symmetrically with respect to the centre of the hull 41, and that the inlets 51 (which correspond, specifically, to the lower ends of the hollow pistons 120 of the pumping devices 100) are in different positions with respect to the hull 41. This means that each of the devices 100 provides different pumping both in terms of quantity of pumped water and in terms of the start of the pumping action.

It is to be noted that in Fig. 10 the hull 41 of the vessel 4 is shown at a short distance from the free surface of the water of the column 3; this has only been performed for the clarity of the drawing; in actual fact, the hull 41 is slightly immersed in the water with displacement equal to the weight of the vessel 4.

## Claims

1. Plant (1) for exploiting the energy of a wave motion of water of an ocean or a sea or a lake, comprising a structure (2) that is fastened to the ground and that is adapted to transform said wave motion of water into an oscillatory motion of a water column (3), a vessel (4) adapted to float on said water column (3), and a pumping unit (5);
wherein said vessel (4) comprises a hull (41);
wherein said pumping unit (5) is housed at least partially in the hull (41) and constrained to said structure (2);
wherein said pumping unit (5) has inlets (51) for water to be pumped fluidly connected to the bottom of said hull (41), and outlets (52) for pumped water; wherein a pumping pipe (6) is fluidly connected to said outlets (52) of said pumping unit (5) and is adapted to supply pumped water to an artificial basin or a tank (7); wherein said vessel (4) further comprises cavities (42) associated with said hull (41); wherein said cavities (42) are adapted to receive water from said water column (3) while said vessel (4) rises and to return water to said water column (3) while said vessel (4) descends;
wherein said pumping unit (5) comprises a part (53) fastened to said structure (2) and a part (54) fastened to said vessel (4).

2. Plant (1) according to claim 1, wherein said vessel (4) comprises one or two or three or four or more cavities (42) associated with said hull (41).

3. Plant (1) according to claim 1 or 2, wherein said cavities (42) are equipped with valves (43) for the outlet/inlet of air while water enters/exits.

4. Plant (1) according to any one of the preceding claims, further comprising a turbine (8), in particular a Pelton wheel, associated with said artificial basin or said tank (7).

5. Plant (1) according to any one of the preceding claims, wherein said pumping unit (5) supplies to the outlets (52) a variable quantity of pumped water according to the height of said vessel (4).

6. Plant (1) according to claim 5, wherein said quantity of pumped water increases as the height of said vessel (4) increases.

7. Plant (1) according to any one of the preceding claims, wherein said pumping unit (5) comprises a plurality of pumping devices (100).

8. Plant (1) according to claim 7, wherein each of said pumping devices (100) comprises a cylinder (110) and a hollow piston (120) adapted to slide in said cylinder (110) and to have a back-and-forth movement; in particular, an inlet (51) of said pumping unit (5) is fluidly connected to said hollow piston (120) and an outlet (52) of said pumping unit (5) is fluidly connected to said cylinder (110).

9. Plant (1) according to claim 8, wherein a first one-way check valve (130) is provided at a lower end of said hollow piston (120) and a second one-way check valve (140) at an upper end of said cylinder (110).

10. Plant (1) according to claim 8 or 9, wherein said cylinder (110) is fixed and is fastened to said structure (2) in particular through a plate (57), and wherein said hollow piston (120) is movable and is fastened to said hull (41).

11. Plant (1) according to any one of the preceding claims, wherein said artificial basin is located at a high piezometric head with respect to the free surface of said ocean or sea or lake, or said tank is pressurised.

## Patentansprüche

1. Anlage (1) zur Ausnutzung/Gewinnung von in einer Wellenbewegung von Wasser in Ozeanen oder Meeren oder Seen enthaltener Energie, umfassend eine Struktur (2), die am Boden verankert ist und zur Umwandlung der Wellenbewegung von Wasser in eine oszillierende Bewegung einer Wassersäule (3) eingerichtet ist; ein Gefäß (4), das dazu eingerichtet ist, auf der Wassersäule (3) zu schweben; und eine Pumpeinheit (5);
wobei das Gefäß (4) einen Rumpf (41) umfasst,
wobei die Pumpeinheit (5) zumindest teilweise im Rumpf (41) aufgenommen ist und an der Struktur (2) befestigt ist;
wobei die Pumpeinheit (5) Eintrittsöffnungen (51) für zu pumpendes Wasser, die mit dem Boden des Rumpfes (41) fluidisch verbunden sind, und Austrittsöffnungen (52) für gepumptes Wasser umfasst;
wobei eine Pumpleitung (6) mit den Austrittsöffnungen (52) der Pumpeinheit (5) fluidisch verbunden ist und zum Zuführen von Pumpwasser in einen künstlichen Staubecken oder einen Tank (7) angepasst ist; wobei das Gefäß (4) ferner Hohlräume (42) umfasst, die dem Rumpf (41) zugeordnet sind;
wobei die Hohlräume (42) dazu ausgebildet sind, Wasser aus der Wassersäule (3) beim Aufsteigen des Gefäßes (4) aufzunehmen, und Wasser in die Wassersäule (3) beim Absteigen des Gefäßes (4) zurückzuführen;
wobei die Pumpeinheit (5) einen an der Struktur (2) befestigten Teil (53) und einen am Gefäß (4) befestigten Teil (54) umfasst.

2. Anlage (1) nach Anspruch 1, wobei das Gefäß (4) einen oder zwei oder drei oder vier oder mehrere Hohlräume (42) umfasst, die dem Rumpf (41) zugeordnet sind.

3. Anlage (1) nach Anspruch 1 oder 2, wobei die Hohlräume (42) mit Ventilen (43) für den Austritt/Eintritt von Luft während Wasser eintritt/austritt ausgestattet sind.

4. Anlage (1) nach irgendeinem der vorgehenden Ansprüche, ferner aufweisend eine dem künstlichen Staubecken oder dem Tank (7) zugeordnete Turbine (8), insbesondere ein Peltonrad.

5. Anlage (1) nach irgendeinem der vorgehenden Ansprüche, wobei die Pumpeinheit (5) den Austrittsöffnungen (52) eine, in Abhängigkeit von der Höhe des Gefäßes (4) variable Menge Pumpwasser zuführt.

6. Anlage (1) nach Anspruch 5, wobei die Menge Pumpwasser mit steigender Höhe des Gefäßes (4) zunimmt.

7. Anlage (1) nach irgendeinem der vorgehenden Ansprüche, wobei die Pumpeinheit (5) eine Vielzahl von Pumpvorrichtungen (100) umfasst.

8. Anlage (1) nach Anspruch 7, wobei jede der Pumpvorrichtungen (100) einen Zylinder (110) und einen Hohlkolben (120) umfasst, der dazu angepasst ist in den Zylinder (110) zu gleiten und eine Vorwärts- und Rückwärts-Bewegung auszuführen; insbesondere, eine Eintrittsöffnung (51) der Pumpeinheit (5) mit dem Hohlkolben (120) fluidisch verbunden und eine Austrittsöffnung (52) der Pumpeinheit (5) mit dem Zylinder (110) fluidisch verbunden ist.

9. Anlage (1) nach Anspruch 8, wobei ein erstes Einweg-Rückschlagventil (130) an einem unteren Ende des Hohlkolbens (120) und ein zweites Einweg-Rückschlagventil (140) an einem oberen Ende des Zylinders (110) vorgesehen ist.

10. Anlage (1) nach Anspruch 8 oder 9, wobei der Zylinder (110) an der Struktur (2), insbesondere durch eine Platte (57) befestigt und verankert ist, und wobei der Hohlkolben (120) beweglich und am Rumpf (41) verankert ist.

11. Anlage (1) nach irgendeinem der vorgehenden Ansprüche, wobei der künstliche Staubecken ein hohes hydraulisches Potential relativ zur freien Oberfläche des Ozeans, Meeres oder Sees hat, oder der Tank mit Druck beaufschlagt ist.

## Revendications

1. Usine (1) pour l'exploitation de l'énergie d'un mouvement ondulatoire de l'eau d'un océan ou d'une mer ou d'un lac, comprenant une structure (2) qui est installée au sol et qui est adaptée pour transformer ledit mouvement ondulatoire de l'eau dans un mouvement oscillatoire d'une colonne d'eau (3), un récipient (4) adapté pour flotter sur ladite colonne d'eau (3), et une unité de pompage (5) ;
dans laquelle ledit récipient (4) comprend une coque (41) ;
dans laquelle ladite unité de pompage (5) est logée au moins partiellement dans la coque (41) et contrainte dans ladite structure (2) ;
dans laquelle ladite unité de pompage (5) a des entrées (51) pour l'eau devant être pompée de manière fluide reliées au fond de ladite coque (41), et des sorties (52) pour l'eau pompée ;
dans laquelle un tuyau de pompage (6) est relié de manière fluide auxdites sorties (52) de ladite unité de pompage (5) et est adapté pour alimenter de l'eau pompée à un bassin artificiel ou réservoir (7) ; dans laquelle ledit récipient (4) comprend en outre des cavités (42) associées à ladite coque (41) ;
dans laquelle lesdites cavités (42) sont adaptées pour recevoir de l'eau de la colonne d'eau (3) pendant que ledit récipient (4) remonte et pour renvoyer l'eau à ladite colonne d'eau (3) pendant que ledit récipient (4) descend ;
dans laquelle ladite unité de pompage (5) comprend une partie (53) installée sur ladite structure (2) et une partie (54) installée sur ledit récipient (4).

2. Usine (1) selon la revendication 1, dans laquelle ledit récipient (4) comprend une ou deux ou trois ou quatre ou plusieurs cavités (42) associées à ladite coque (41).

3. Usine (1) selon la revendication 1 ou 2, dans laquelle lesdites cavités (42) sont munies de vannes (43) pour la sortie/l'entrée de l'air pendant que l'eau entre/sort.

4. Usine (1) selon l'une quelconque des revendications précédentes, comprenant en outre une turbine (8), en particulier une roue Pelton, associée audit bassin artificiel ou audit réservoir (7).

5. Usine (1) selon l'une quelconque des revendications précédentes, dans laquelle ladite unité de pompage (5) alimente les sorties (52) en quantité variable d'eau pompée selon la hauteur dudit récipient (4).

6. Usine (1) selon la revendication 5, dans laquelle ladite quantité d'eau pompée augmente à mesure que la hauteur dudit récipient (4) augmente.

7. Usine (1) selon l'une quelconque des revendications précédentes, dans laquelle ladite unité de pompage (5) comprend une pluralité de dispositifs de pompage (100).

8. Usine (1) selon la revendication 7, dans laquelle chacun desdits dispositifs de pompage (100) comprend un cylindre (110) et un piston creux (120) adapté pour glisser dans ledit cylindre (110) et avoir un mouvement d'aller et retour ; en particulier, une entrée (51) de ladite unité de pompage (5) est reliée de manière fluide audit piston creux (120) et une sortie (52) de ladite unité de pompage (5) est reliée de manière fluide audit cylindre (110).

9. Usine (1) selon la revendication 8, dans laquelle un premier clapet anti-retour unidirectionnel (130) est fourni au niveau d'une extrémité inférieure dudit piston creux (120) et un deuxième clapet anti-retour unidirectionnel (140) au niveau d'une extrémité supérieure dudit cylindre (110).

10. Usine (1) selon la revendication 8 ou 9, dans laquelle ledit cylindre (110) est fixé et installé sur ladite structure (2) en particulier à travers une plaque (57), et dans laquelle ledit piston creux (120) est déplaçable et est installé sur ladite coque (41).

11. Usine (1) selon l'une quelconque des revendications précédentes, dans laquelle ledit bassin artificiel est positionné à une hauteur piézométrique élevée par rapport à la surface libre dudit océan ou mer ou lac, ou ledit réservoir est sous pression.
